# EUROPÄISCHE PATENTANMELDUNG

(11) **EP 4 489 520 A1**
(43) Veröffentlichungstag der Anmeldung: **08.01.2025**
(21) Anmeldenummer: 23191213.0
(22) Anmeldetag: 12.08.2023
(51) Int. Cl.: H05B 6/10, H05B 6/12, A47J 27/21

(54) **KOCHGESCHIRR FÜR EIN INDUKTIONSKOCHFELD**

(30) Priorität: 07.07.2023 DE 102023118102
(71) Anmelder: Xinco GmbH, 44801 Bochum (DE)
(72) Erfinder: Zachos, Alexandros, 45131 Essen (DE); Iffland, Thomas, 45529 Hattingen (DE)
(74) Vertreter: Pfeffer, Michael

(57) **Zusammenfassung**

Die Erfindung betrifft ein Kochgeschirr (1) für ein Induktionskochfeld (2) mit mindestens einem zur Aufnahme von Kochgut (3) und/oder Gargut ausgebildeten Behälter (4) mit mindestens einem Kontaktabschnitt (5) zur Kontaktierung des Induktionskochfelds (2), wobei das Kochgeschirr (1) mindestens ein Induktionselement (6) aufweist, welches relativ bewegbar zu dem Kontaktabschnitt (5) in dem Behälter (4) angeordnet ist, wobei das Kochgeschirr (1) ein Betätigungsmodul (7) zur Erzeugung einer Relativbewegung zwischen dem Induktionselement (6) und dem Kontaktabschnitt (5) umfasst, wobei das Induktionselement (6) durch das Betätigungsmodul (7) von einer Ruheposition in eine Betriebsposition bewegbar ist, wobei das Betätigungsmodul (7) über ein Verbindungselement (13) mit dem Induktionselement (6) verbunden ist, wobei in der Betriebsposition das Induktionselement (6) von dem Induktionskochfeld (2) induktiv erwärmbar, insbesondere erhitzbar ist, und in der Ruheposition das Induktionselement (6) von dem Kontaktabschnitt (5) derart beabstandet ist, dass die von dem Induktionskochfeld (2) erzeugte Induktionswirkung auf das Induktionselement (6) minimiert wird, wobei das Induktionselement (6) aus einem ferromagnetischen Material (9) ausgebildet ist und zusätzlich mindestens ein elektrisch leitfähiges Material (10) umfasst.

## Beschreibung

Die Erfindung betrifft ein Kochgeschirr für ein Induktionskochfeld gemäß dem Oberbegriff des Patentanspruchs 1.

Aus dem Stand der Technik ist die WO2020/245281A1 bekannt. In diesem Dokument ist ein Kochgeschirr zur Erwärmung, insbesondere eines Fluids, wie beispielsweise Wasser für ein Induktionskochfeld offenbart. Das Kochgeschirr umfasst ein in einem Deckelmodul angeordnetes Betätigungsmodul, einen Behälter mit einem Kontaktabschnitt und eine kreisförmig als Induktionselement ausgebildete Kochplatte, die in einer Betriebsposition durch das Induktionskochfeld erwärmt bzw. erhitzt wird. Das Induktionselement ist mittels eines Verbindungselements mit dem Betätigungsmodul verbunden. Das Induktionselement ist aus einem ferromagnetischen Material ausgebildet, welches nur schwach elektrisch leitfähig ist. Das Induktionselement ist als magnetische und korrosionsbeständige Kochplatte ausgebildet und umfasst ferritischen Edelstahl. Daraus resultiert zwar eine hohe magnetische Leitfähigkeit, jedoch auch eine geringe elektrische Leitfähigkeit. Das Induktionselement ist zwar wegen der hohen magnetischen Leitfähigkeit durchlässig für die vom Induktionsfeld erzeugten magnetischen Feldlinien, aber die in dem Induktionselement induzierten Wirbelströme, welche durch das Induktionskochfeld erzeugt werden, sorgen nur verlangsamt für eine Erwärmung des Induktionselements. Aufgrund der geringen elektrischen Leitfähigkeit des Induktionselements, werden weniger Wirbelströme in dem Induktionselement induziert, so dass nur eine geringe Energieübertragung auf das Induktionselement erfolgt. Insbesondere bei einem Einsatz von im Induktionskochfeld angeordneten Großspulen sind die induzierten Wirbelströme in dem Induktionselement am äußeren Rand des Induktionselements größer als im Zentrum des Induktionselements. Im Ergebnis führt dies zu einer langsamen Erwärmung des Induktionselements, weil die elektrische Leitfähigkeit des bekannten Induktionselements zu gering ist. Daher erwärmt sich infolge der Induktionswirkung das Induktionselement, insbesondere in seinem Zentrum nur langsam, so dass im Ergebnis das Wasser auch langsamer erhitzt wird und somit ein Benutzer länger warten muss, bis das Wasser beispielsweise die Temperatur von 100 Grad Celsius erreicht hat. Die geringe Energieübertragung sorgt für eine schlechtere Erkennbarkeit des Induktionselements auf Induktionskochfeldern mit kleinen Induktionsspulen (z.B. Flexfelder, Variofelder, Vollflächeninduktionsfelder). Diese lassen sich dann nicht einschalten bzw. schalten nach kurzer Zeit automatisch wieder aus oder sie unterbrechen die Energieübertragung immer wieder und der Kochvorgang dauert zu lange. Man kann das Kochgeschirr daher nur eingeschränkt verwenden.

Daher ist es die Aufgabe der Erfindung, ein Kochgeschirr bereitzustellen, welches eine schnellere Erwärmung, insbesondere Erhitzung des Kochguts und/oder Garguts gewährleistet.

Die Aufgabe wird gelöst durch den Patentanspruch 1, insbesondere durch den kennzeichnenden Teil des Patentanspruchs 1. Dabei ist ein Kochgeschirr für ein Induktionskochfeld mit mindestens einem zur Aufnahme von Kochgut und/oder Gargut ausgebildeten Behälter mit mindestens einem Kontaktabschnitt zur Kontaktierung des Induktionskochfelds vorgesehen, wobei das Kochgeschirr mindestens ein Induktionselement aufweist, welches relativ bewegbar zu dem Kontaktabschnitt in dem Behälter angeordnet ist, wobei das Kochgeschirr ein Betätigungsmodul zur Erzeugung einer Relativbewegung zwischen dem Induktionselement und dem Kontaktabschnitt umfasst, wobei das Induktionselement durch das Betätigungsmodul von einer Ruheposition in eine Betriebsposition bewegbar ist, wobei das Betätigungsmodul über ein Verbindungselement mit dem Induktionselement verbunden ist, wobei in der Betriebsposition das Induktionselement von dem Induktionskochfeld induktiv erwärmbar, insbesondere erhitzbar ist, und in der Ruheposition das Induktionselement von dem Kontaktabschnitt derart beabstandet ist, dass die von dem Induktionskochfeld erzeugte Induktionswirkung auf das Induktionselement minimiert wird. Die Aufgabe wird insbesondere dadurch gelöst, dass das Induktionselement aus einem ferromagnetischen Material ausgebildet ist und zusätzlich mindestens ein elektrisch leitfähiges Material umfasst.

Das Induktionselement kann als magnetische und korrosionsbeständige Kochplatte ausgebildet sein und kann ferritischen Edelstahl und zusätzlich elektrisch leitfähiges Material umfassen. Im Ergebnis ist das Induktionselement wegen der hohen magnetischen Leitfähigkeit durchlässig für die vom Induktionsfeld erzeugten magnetischen Feldlinien, wobei die in dem Induktionselement induzierten Wirbelströme, welche durch das Induktionskochfeld erzeugt werden, nun in Kombination mit dem zusätzlich elektrisch leitfähigen Material für eine bessere und beschleunigte Erwärmung, insbesondere Erhitzung des Induktionselements sorgen.

Aufgrund der erhöhten elektrischen Leitfähigkeit des Induktionselements werden nun zuverlässig Wirbelströme in dem Induktionselement induziert, so dass eine schnelle und zuverlässige Energieübertragung auf das Induktionselement erfolgt. Durch das zusätzlich vorgesehene elektrisch leitfähige Material, welches das Induktionselement umfasst, kann die Energieübertragung von dem Induktionskochfeld auf das Induktionselement verbessert werden und kann für eine bessere Erkennbarkeit des Induktionselements auf dem Induktionskochfeld, insbesondere bei Induktionskochfeldern mit kleinen Induktionsspulen, wie beispielsweise Flexkochfelder, Variokochfelder oder Vollflächeninduktionskochfelder sorgen. Diese können sich dann problemlos einschalten und schalten sich nach kurzer Zeit nicht automatisch wieder aus. Das Kochgeschirr kann auch bei Induktionskochfeldern, welche Großspulen umfassen, für eine schnelle und zuverlässige Erhitzung des Kochguts und/oder Garguts sorgen. Somit kann in vorteilhafterweise die Energieübertragung von dem Induktionskochfeld zu dem Induktionselement weiter verbessert werden, so dass der Kochvorgang und/oder Garvorgang des Kochguts und/oder Garguts, insbesondere des Wassers zeitlich beschleunigt wird. Insofern wird der Komfort für den Benutzer erhöht, wenn der Benutzer das Kochgeschirr benutzt, um das Kochgut und/oder Gargut zu erwärmen, insbesondere zu erhitzen. Insbesondere bei einem Einsatz von im Induktionskochfeld angeordneten Großspulen sind die induzierten Wirbelströme in dem Induktionselement in der Regel am äußeren Rand des Induktionselements größer als im Zentrum des Induktionselements. Aufgrund des zusätzlichen leitfähigen Materials, welches das Induktionselement umfasst, führt dies auch hier zu einer schnelleren Erwärmung, insbesondere Erhitzung des Induktionselements.

Das Induktionselement kann beispielsweise als Kochplatte ausgebildet sein, und vorzugsweise als rundförmige, insbesondere kreisförmige Scheibe ausgestaltet sein. Des Weiteren kann das Kochgeschirr mindestens ein erstes Federelement umfassen, durch welches das Betätigungsmodul bewegbar ist.

Das Kochgut kann beispielsweise als Fluid ausgebildet sein, insbesondere Wasser umfassen, welches beispielsweise bis 100 Grad Celsius erwärmt werden kann. Wenn das Kochgut und/oder Gargut anfängt zu kochen, kann ein heißes Fluid entstehen, welches Wasserdampf umfassen kann, wobei das Fluid, insbesondere der Wasserdampf dann durch einen Fluideintrittskanal in eine Fluidkammer, insbesondere Dampfkammer des Kochgeschirrs eintreten kann, wobei die Fluidkammer, insbesondere Dampfkammer für die Aufnahme von Wasserdampf ausgebildet sein kann.

In der Ruheposition ist das Induktionselement von dem Kontaktabschnitt derart beabstandet, dass die von dem Induktionskochfeld erzeugte Induktionswirkung auf das Induktionselement minimiert wird. Dies kann bedeuten, dass die erzeugte Induktionswirkung so gering ist, dass ein Erhitzen oder Erwärmen des Kochguts und/oder Garguts nicht mehr möglich sein kann. Im Extremfall ist der Abstand so minimiert, dass das Induktionselement durch die von dem Induktionskochfeld erzeugte Induktionswirkung nicht mehr beeinflusst ist und daher keine Induktionswirkung mehr stattfinden kann. Im Ergebnis könnte sich das Induktionskochfeld beispielsweise selbstständig abschalten.

Nach einer bevorzugten Ausführung des Kochgeschirrs kann vorgesehen sein, dass das Induktionselement eine Legierung umfasst, welche zumindest das ferromagnetische Material und das elektrisch leitfähige Material umfasst, wobei das ferromagnetische Material und/oder das elektrisch leitfähige Material als Legierungselement ausgebildet ist. Diese Lösung weist den Vorteil auf, dass bei der Herstellung des Induktionselements das elektrisch leitfähige Material gleichmäßig in und/oder auf dem Induktionselement verteilt werden kann, so dass eine zuverlässige, schnelle, konstante, vollflächige und vollständige Erwärmung, insbesondere Erhitzung des Induktionselements und des Kochguts und/oder Garguts möglich ist. Die Legierung kann Legierungselemente wie beispielsweise Kupfer, Wolfram, Magnesium, Molybdän, Chrom oder Nickel umfassen.

Nach einer weiteren bevorzugten Ausführung des Kochgeschirrs kann vorgesehen sein, dass mindestens ein Abschnitt des Induktionselements, insbesondere angeordnet auf einer ersten Seite und/oder zweiten Seite und/oder auf mindestens einem Seitenrand des Induktionselements, eine elektrisch leitfähige Struktur aufweist, welche das elektrisch leitfähige Material umfasst. Die elektrisch leitfähige Struktur kann alternativ oder zusätzlich zu dem elektrisch leitfähigen Legierungselement vorgesehen werden. Die erste Seite kann zu dem Induktionskochfeld abgewandt sein und die zweite Seite kann dem Induktionskochfeld zugewandt sein. Somit ist die erste Seite weiter von dem Induktionskochfeld, insbesondere zu dem Kontaktabschnitt beabstandet als die zweite Seite des Induktionselements.

Diese Lösung weist ebenfalls den Vorteil auf, dass bei der Herstellung des Induktionselements das elektrisch leitfähige Material gleichmäßig oder auch unregelmäßig auf dem Induktionselement angeordnet werden kann, so dass eine zuverlässige, schnelle, konstante, vollflächige und vollständige Erwärmung, insbesondere Erhitzung des Induktionselementsund des Kochguts und/oder Garguts möglich ist. Dabei kann die elektrisch leitfähige Struktur, welche das elektrisch leitfähige Material umfasst, als elektrolytische, galvanische oder chemische Beschichtung ausgebildet sein oder als separates Element, insbesondere als Bauteil ausgebildet sein, welches kraftschlüssig und/oder formschlüssig und/oder stoffschlüssig mit dem Induktionselement verbunden ist. Die elektrisch leitfähige Struktur kann auch bei bereits bestehenden Induktionselementen in vorteilhafterweise nachträglich, vorzugsweise im Sinne einer Nachrüstlösung, angeordnet werden. Die elektrisch leitfähige Struktur kann auf einer Oberfläche, insbesondere in einem Bereich zwischen einem äußeren Rand des Induktionselements und einem Mittelpunkt des Induktionselements angeordnet werden, so dass die elektrische Leitfähigkeit auch dort verbessert wird, um das Kochgut und/oder Gargut schneller zu erwärmen, insbesondere zu erhitzen.

Die Beschichtung kann man in der Regel mit Elektrolyse, Galvanik oder Chemie, zum Beispiel durch chemisches Vernickeln, realisieren. Die elektrisch leitfähige Struktur, insbesondere das elektrisch leitfähige Material kann auch mit dem ferromagnetischen Material verbunden sein, beispielsweise durch Schraubverbindungen, Nietverbindungen, Clinchverbindungen, Klebverbindungen, Lötverbindungen, Schweißverbindungen, Diffusionsverbindungen, oder auch durch Temperaturverfahren, Druckverfahren, chemische Verfahren oder galvanische Verfahren.

Es können mehr Wirbelströme in dem Induktionselement induziert werden, wenn die elektrisch leitfähige Struktur, welche das elektrisch leitfähige Material umfasst, sich auf dem Induktionselement radial von außen nach innen erstreckt. Somit kann in vorteilhafterweise das Kochgut und/oder Gargut noch schneller erwärmt, insbesondere erhitzt werden.

Zusätzlich oder alternativ ist es möglich, dass die elektrisch leitfähige Struktur, welche das elektrisch leitfähige Material umfasst, als radial umlaufender Ring, insbesondere Kreis ausgebildet ist. Auch durch diese Ausgestaltung des Induktionselements ist es möglich, dass mehr Wirbelströme in dem Induktionselement induziert werden können, um in vorteilhafterweise das Kochgut und/oder Gargut noch schneller erwärmen, insbesondere erhitzen zu können.

Das Gewicht und die Kosten für die Herstellung des Kochgeschirrs, insbesondere des Induktionselements können verringert werden, wenn mindestens ein erster Abschnitt aufweisend die elektrisch leitfähige Struktur und mindestens ein zweiter Abschnitt aufweisend die elektrisch leitfähige Struktur auf dem Induktionselement, insbesondere auf der ersten und/oder zweiten Seite des Induktionselements angeordnet ist, wobei der erste Abschnitt beabstandet zu dem zweiten Abschnitt angeordnet ist, wobei zwischen dem ersten Abschnitt und dem zweiten Abschnitt ein Zwischenabschnitt angeordnet ist. Dabei kann der Zwischenabschnitt aus dem ferromagnetischen Material ausgebildet sein.

Nach einer weiteren bevorzugten Ausführung des Kochgeschirrs kann vorgesehen sein, dass der Zwischenabschnitt mindestens eine Ausnehmung und/oder mindestens eine Durchlassöffnung umfasst. Durch diese vorteilhafte Ausgestaltung des Kochgeschirrs, insbesondere des Induktionselements kann die Stabilität und die Festigkeit des Induktionselements verbessert werden, so dass sich beim Erwärmen, insbesondere Erhitzen des Induktionselements dieses sich kaum oder gar nicht verbiegen kann. Somit wird die Lebensdauer des Kochgeschirrs erheblich verlängert. Es hat sich gezeigt, dass die Durchlassöffnung, insbesondere schlitzförmig ausgebildete Durchlassöffnungen die Vibrationen des Induktionselements während des Erwärmungsprozesses, insbesondere während des Erhitzungsprozesses deutlich reduzieren können. Daher kann die Durchlassöffnung beispielsweise als Schlitz ausgebildet sein. Dabei kann der Schlitz unterschiedliche Ausgestaltungen aufweisen. Denkbar sind beispielsweise rechteckig ausgebildete Schlitze oder wellenförmig ausgebildete Schlitze oder dreieckförmig oder oval ausgebildete Schlitze. Des Weiteren können sich während des Erwärmungsprozesses, insbesondere Erhitzungsprozesses Blasen auf der Oberfläche des Induktionselements bilden. Die Blasen auf der Unterseite des Induktionselements strömen durch die Durchlassöffnungen schneller nach oben. Die Durchlassöffnungen können derart ausgebildet sein, dass das Kochgut und/oder das Gargut, insbesondere die dabei entstehenden Blasen beim Erwärmen bzw. Erhitzen des Kochguts und/oder Garguts so gut hindurchströmen können, dass das Vibrieren des Induktionselements reduziert werden kann oder sogar ausgeschlossen werden kann. Aufgrund der reduzierten bzw. nicht mehr vorhandenen Vibration des Induktionselements kann somit auch das Erwärmen, insbesondere Erhitzen des Induktionselements schneller ausgeführt werden, weil der Abstand des Induktionselements zur Kontaktfläche während des Erwärmens, insbesondere Erhitzens des Kochguts und/oder Garguts im Wesentlichen konstant bleibt. Somit wird der Kochvorgang und/oder Garvorgang aufgrund der Kombination der auf dem Induktionselement angeordneten Durchlassöffnungen und des zusätzlichen leitfähigen Materials, welches das Induktionselement umfasst, deutlich beschleunigt und gleichzeitig wird ein Vibrieren des Induktionselements verringert, wodurch die Geräuschentwicklung während des Kochvorgangs und/oder Garvorgangs ebenfalls zusätzlich verringert wird. Ferner kann der Austausch des Kochguts und/oder Garguts, insbesondere Wasser besser oberhalb und unterhalb des Induktionselements zirkulieren und sich besser vermischen, wodurch die Erwärmung, insbesondere Erhitzung des Kochguts und/oder Garguts weiter beschleunigt wird. Ferner kann vorgesehen sein, dass das Induktionselement einen Zentralabschnitt mit einer Öffnung zur Lagerung des Verbindungselements umfasst, wobei die Durchlassöffnung zwischen der Öffnung und dem äußeren Randabschnitt angeordnet ist und sich radial von der Öffnung, insbesondere von dem Zentralabschnitt in Richtung des äußeren Randabschnitts erstreckt. So ist es denkbar, dass die elektrisch leitfähige Struktur auch auf dem Zentralabschnitt angeordnet werden kann, wobei dann der Abschnitt als Zentralabschnitt ausgebildet ist.

Der Kochvorgang und/oder Garvorgang kann zeitlich beschleunigt werden, wenn der Abschnitt aufweisend die elektrisch leitfähige Struktur, welche das elektrisch leitfähige Material umfasst, sich vollflächig mindestens über die erste Seite und/oder zweite Seite des Induktionselements und/oder über das gesamte Induktionselement, insbesondere über den Seitenrand des Induktionselements erstreckt. Wenn vorzugsweise alle Oberflächen des Induktionselements mit einem elektrisch leitfähigen Material, insbesondere eine elektrisch leitfähige Struktur aufweisen, können mehr Wirbelströme gleichmäßig verteilt auf dem Induktionselement induziert werden.

Der konstruktive Aufbau des Induktionselements kann vereinfacht werden, wenn das Induktionselement einen sandwichförmigen Aufbau aufweist, wobei der sandwichförmige Aufbau mindestens eine, vorzugsweise zwei Schichten umfasst, insbesondere eine erste Schicht und eine zweite Schicht sowie vorzugsweise eine dritte Schicht umfasst. Des Weiteren kann vorgesehen sein, dass der sandwichförmige Aufbau mindestens eine Schicht aufweist, welche das ferromagnetische Material umfasst, und mindestens eine Schicht aufweist, welche das elektrisch leitfähige Material umfasst. Durch den sandwichförmigen Aufbau des Induktionselements kann dieses gleichmäßig erwärmt, insbesondere erhitzt werden. Somit kann das Kochgut und/oder Gargut positionsunabhängig in dem Behälter des Kochgeschirrs angeordnet werden.

Bei dem sandwichförmigen Aufbau des Induktionselements können die Abschnitte des Induktionselements, welche mit einem elektrisch leitfähigen Material, insbesondere mit Kupfer oder Aluminium oder Nickel versehen sind, mit einem korrosionsbeständigen Material, wie beispielsweise Edelstahl, insbesondere von einer Edelstahlschicht umschlossen, insbesondere versiegelt werden. Somit kann die Lebensdauer des Induktionselements weiter erhöht werden.

Bei dem sandwichförmigen Aufbau des Induktionselements kann das ferromagnetische Material im Kern Abschnitte nicht korrosionsbeständigen Material umfassen, insbesondere ferromagnetischen nicht korrosionsbeständigen Stahl, welches mit einem korrosionsbeständigen elektrisch leitfähigen Material, insbesondere Nickel oder Aluminium, umschlossen, insbesondere versiegelt werden. Diese Lösung weist den Vorteil auf, dass das ferromagnetische Material aus ferromagnetischem Stahl ausgebildet sein kann, welches kostengünstiger ist als ferromagnetischer Edelstahl. Somit kann das Induktionselement vorteilhafterweise kostengünstiger hergestellt werden.

Bevorzugt kann daher vorgesehen sein, dass die erste Schicht das ferromagnetische Material oder das elektrisch leitfähige Material umfasst, und/oder die zweite Schicht das ferromagnetische Material oder das elektrisch leitfähige Material umfasst und/oder die dritte Schicht das ferromagnetische Material und/oder das elektrisch leitfähige Material umfasst, wobei die erste Schicht und/oder die zweite Schicht und/oder die dritte Schicht die elektrisch leitfähige Struktur aufweist, welche das elektrisch leitfähige Material umfasst oder die erste Schicht und/oder die zweite Schicht und/oder die dritte Schicht die Legierung aufweist, welche zumindest das ferromagnetische Material und das elektrisch leitfähige Material umfasst.

Nach einer weiteren bevorzugten Ausführung des Induktionselements kann vorgesehen sein, dass das elektrisch leitfähige Material aus Kupfer und/oder Aluminium und/oder Nickel ausgebildet ist. Insbesondere Nickel und Aluminium zeichnen sich dadurch aus, dass diese Werkstoffe eine besonders hohe Korrosionsbeständigkeit aufweisen. Somit kann in vorteilhafterweise das Induktionselement vor Korrosion besser geschützt werden, insbesondere bei einem Kochgut und/oder Gargut, welches beispielsweise einen hohen Salzgehalt aufweist. Alternativ zu den oben genannten Werkstoffen, kann das elektrisch leitfähige Material auch aus Silber, Gold, Messing, Chrom, Eisen oder Stahl ausgebildet sein.

Nach einer weiteren bevorzugten Ausführung des Induktionselements kann vorgesehen sein, dass Oberflächen, insbesondere die erste Seite und/oder die zweite Seite, des Induktionselements und insbesondere der Seitenrand des Induktionselements, vorzugsweise alle Seitenränder des Induktionselements zumindest teilweise, vorzugsweise vollständig aus dem ferromagnetischen Material und/oder aus dem elektrisch leitfähigen Material, vorzugsweise aus Nickel und/oder Aluminium korrosionsbeständig ausgebildet sind. Die Induktionswirkung des Induktionselements kann verbessert werden, wenn die zweite Seite das ferromagnetische Material aufweist und keine weitere Schicht aufweisend das elektrische leitfähige Material umfasst, weil der Abstand des ferromagnetischen Materials zu dem Induktionskochfeld, insbesondere zu dem Kontaktabschnitt dann nicht durch eine zusätzliche Schicht verringert wird.

Bevorzugt kann vorgesehen sein, dass das auf dem Induktionselement angeordnete elektrisch leitfähige Material vollständig von dem ferromagnetischen Material umschlossen, insbesondere eingebettet ist. Durch diese Maßnahme kann es gelingen, die Korrosionsbeständigkeit des Induktionselements zu verbessern.

Die Wärmeleitfähigkeit des Induktionselements kann bedeutend gesteigert werden, wenn das aus dem ferromagnetischen Material ausgebildete Induktionselement von dem elektrisch leitfähigen Material vollständig umschlossen, insbesondere eingebettet ist.

Mindestens eine der drei Schichten des Induktionselements können jeweils auch Abschnitte umfassen, die die elektrisch leitfähige Struktur aufweisen, welche das elektrisch leitfähige Material umfassen. Denkbar ist es auch, dass mindestens eine der drei Schichten des Induktionselements eine Legierung umfasst, welche zumindest das ferromagnetische Material und/oder das elektrisch leitfähige Material umfasst, wobei das ferromagnetische Material und/oder das elektrisch leitfähige Material als Legierungselement ausgebildet ist.

Die Erfindung sowie das technische Umfeld werden nachfolgend anhand der Figuren näher erläutert. Es ist darauf hinzuweisen, dass die Figuren besonders bevorzugte Ausführungsbeispiele der Erfindung zeigen, die Erfindung jedoch nicht darauf beschränkt ist. Es zeigen:
- Figur 1A: ein Kochgeschirr in einer Ruheposition,
- Figur 1B: das Kochgeschirr in einer Betriebsposition,
- Figur 2: ein Induktionselement in einer perspektivischen Ansicht gemäß einer ersten Ausführungsform,
- Figur 3: ein Induktionselement in einer perspektivischen Ansicht gemäß einer zweiten Ausführungsform,
- Figur 4: ein Induktionselement in einer perspektivischen Ansicht gemäß einer dritten Ausführungsform,
- Figur 5: ein Induktionselement in einer perspektivischen Ansicht gemäß einer vierten Ausführungsform,
- Figur 6: ein Induktionselement in einer perspektivischen Ansicht gemäß einer fünften Ausführungsform, und
- Figuren 7a-7m: unterschiedliche sandwichförmige Ausgestaltungen eines Induktionselements.

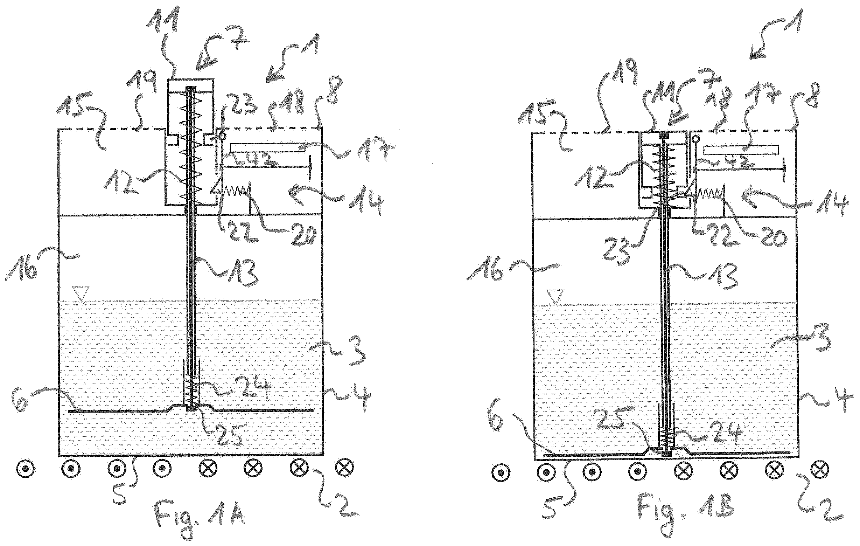

In den Figuren 1A und 1B ist schematisch ein Kochgeschirr 1 für ein Induktionskochfeld 2 dargestellt. Das Kochgeschirr 1 weist mindestens einen zur Aufnahme von Kochgut 3 und/oder Gargut ausgebildeten Behälter 4 mit mindestens einem Kontaktabschnitt 5 zur Kontaktierung des Induktionskochfelds 2 auf. Das Kochgut 3 kann beispielsweise als Fluid, insbesondere als Wasser ausgebildet sein.

Des Weiteren weist das Kochgeschirr 1 mindestens ein vorzugsweise als Kochplatte ausgebildetes Induktionselement 6 auf, welches mit einem Betätigungsmodul 7 verbunden ist, welches an und/oder in einem Deckelelement 8 angeordnet sein kann. Das Induktionselement 6 kann aus einem ferromagnetischen Material 9 ausgebildet sein und kann zusätzlich mindestens ein elektrisch leitfähiges Material 10 umfassen, wobei das elektrisch leitfähige Material 10 vorzugsweise aus Kupfer und/oder Aluminium und/oder Nickel ausgebildet sein kann. Das Betätigungsmodul 7 dient zur Erzeugung einer Relativbewegung zwischen dem Induktionselement 6 und dem Kontaktabschnitt 5. Das Betätigungsmodul 7 umfasst zumindest ein Betätigungselement 11 und ein erstes Federelement 12, durch welches das Betätigungsmodul 7 bewegt werden kann, wobei ein Verbindungselement 13 mit dem Induktionselement 6 verbunden ist. Das Induktionselement 6 kann durch das Betätigungsmodul 7 von einer Ruheposition in eine Betriebsposition bewegt werden.

In der Betriebsposition wird das Induktionselement 6 von dem Induktionskochfeld 2 induktiv erwärmt, insbesondere erhitzt. In der Ruheposition ist das Induktionselement 6 von dem Kontaktabschnitt 5 derart beabstandet, wie in der Figur 1A gezeigt, dass die Induktionswirkung des Induktionskochfelds 2 auf das Induktionselement 6 minimiert wird. Je weiter entfernt das Induktionselement 6 von dem Induktionskochfeld 2 angeordnet ist, desto geringer ist die Induktionswirkung des Induktionskochfelds 2 auf das Induktionselement 6. Bei einem genügend großen Abstand des Induktionselements 6 zu dem Induktionskochfeld 2 findet keine Induktionswirkung auf das Induktionselement 6 mehr statt und das Induktionskochfeld 2 könnte sich selbstständig abschalten.

Des Weiteren weist das Kochgeschirr 1 ein Auslösemodul 14 auf, welches beispielsweise als separates Bauelement ausgebildet sein kann und innerhalb des Deckelelements 8 angeordnet ist. Das Deckelelement 8 umfasst eine Fluidkammer 15, insbesondere Dampfkammer, einen mit einem Innenraum 16 verbundenen Fluideinlasskanal 17, einen Fluidauslasskanal 18 und einen Kühlungskanal 19. Das Auslösemodul 12 kann zumindest einen vorzugsweise als Hebel oder Riegel, hier vorzugsweise als Schwenkhebel ausgebildetes Halteelement 42, ein mit dem Halteelement 42 verbundenes drittes Federelement 20 und einen vorzugsweise als Formgedächtniselement, hier als Draht ausgebildeten thermischen Aktuator 21 aufweisen, welcher ebenfalls mit dem Halteelement 42 verbunden ist. Das Halteelement 42 umfasst weiter ein Rastelement 22. Das Betätigungsmodul 7, insbesondere das Betätigungselement 11 umfasst ein Betätigungsgegenrastelement 23, alternativ ein Betätigungsrastelement. Wie in der Figur 1B dargestellt, ist in der Betriebsposition des Induktionselements 6 das Rastelement 22 des Halteelements 42 mit dem Betätigungsgegenrastelement 23 des Betätigungselements 11 im Eingriff. Wie man gut in den Figuren 1A und 1B erkennen kann, weist das Rastelement 22 eine schiefe Ebene auf, auf welcher das Betätigungsgegenrastelement 23 in einer Zwischenposition beim Übergang des Induktionselements 6 von der Ruheposition in die Betriebsposition entlang gleitet. Das Kochgeschirr 1 umfasst mindestens ein zweites Federelement 24, wobei das zweite Federelement 24 zwischen dem Induktionselement 6 und dem Betätigungsmodul 7 angeordnet ist. Im vorliegenden Ausführungsbeispiel ist das zweite Federelement 24 derart angeordnet, dass es sich an dem Induktionselement 6 und an dem Betätigungsmodul 7 abstützt. Das zweite Federelement 24 ist mit dem Verbindungselement 13 und/oder mit dem Betätigungsmodul 7 und/oder mit dem Induktionselement 6 kraftschlüssig und/oder formschlüssig und/oder stoffschlüssig verbunden. Das Verbindungselement 11 und das Induktionselement 6 können formschlüssig und/oder kraftschlüssig über ein kardanisches Element 25 miteinander verbunden sein.

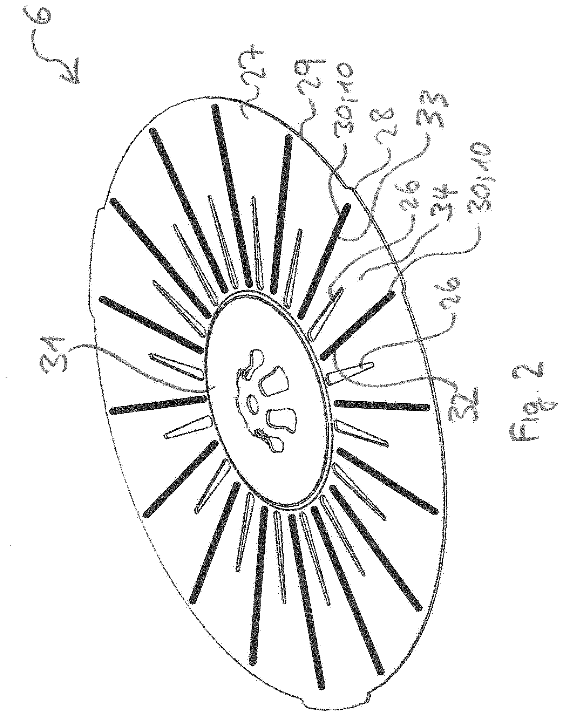

In den Figuren 2 bis 6 sind jeweils bevorzugte Ausführungen des Induktionselements 6 näher dargestellt, welche beispielsweise bei dem Ausführungsbeispiel der Figuren 1A und 1B verwendet werden können. Es werden in den Figuren 2 bis 6 für gleiche Bauteile dieselben Bezugszeichen verwendet.

Das Induktionselement 6 gemäß der Figur 2 weist mindestens eine beispielsweise schlitzförmig ausgebildete Durchlassöffnung 26 auf, die für das Hindurchströmen des Kochguts 3 und/oder des Garguts vorgesehen ist. Mindestens ein Abschnitt des Induktionselements 6, insbesondere angeordnet auf einer ersten Seite 27 und/oder auf der zweiten Seite 28 und/oder auf mindestens einem Seitenrand 29 des Induktionselements 6, weist mindestens eine elektrisch leitfähige Struktur 30 auf, welche das elektrisch leitfähige Material 10 umfasst. Im vorliegenden Fall kann der Abschnitt der Bereich auf dem Induktionselement 6, insbesondere auf der ersten Seite 27 des Induktionselements 6 sein, welcher keine Durchlassöffnungen 26 aufweist. So ist es zusätzlich oder alternativ denkbar, die elektrisch leitfähige Struktur 30 auch auf einem Zentralabschnitt 31 anzuordnen, wobei dann der Abschnitt als Zentralabschnitt 31 ausgebildet ist. Die elektrisch leitfähige Struktur 30 kann als elektrolytische, galvanische oder chemische Beschichtung ausgebildet sein oder als separates Element, insbesondere als Bauteil ausgebildet sein, welches kraftschlüssig und/oder formschlüssig und/oder stoffschlüssig mit dem Induktionselement 6 verbunden ist. Die elektrisch leitfähige Struktur 30, welche beispielsweise als Draht ausgebildet sein kann, kann dabei kraftschlüssig und/oder formschlüssig und/oder stoffschlüssig mit dem Induktionselement 6 verbunden sein. Dabei kann die elektrisch leitfähige Struktur 30, welche das elektrisch leitfähige Material 10 umfasst, sich radial auf dem Induktionselement 6 von außen nach innen erstrecken. Es ist weiter vorgesehen, dass mindestens ein erster Abschnitt 32 aufweisend die elektrisch leitfähige Struktur 30 und mindestens ein zweiter Abschnitt 33 aufweisend die elektrisch leitfähige Struktur 30 auf dem Induktionselement 6, insbesondere auf der ersten Seite 27 und/oder zweiten Seite 28 des Induktionselements 6 angeordnet ist, wobei der erste Abschnitt 32 beabstandet zu dem zweiten Abschnitt 33 angeordnet ist, wobei zwischen dem ersten Abschnitt 32 und dem zweiten Abschnitt 33 ein Zwischenabschnitt 34 angeordnet ist, wie dies beispielsweise in der Figur 2 gezeigt ist. Hier umfasst der jeweilige Zwischenabschnitt 34 mindestens die Durchlassöffnung 26. Alternativ kann auf dem jeweiligen Zwischenabschnitt 34 auch eine Ausnehmung angeordnet werden. Denkbar ist es auch, dass der jeweilige oder mindestens ein Zwischenabschnitt 34 aus dem ferromagnetischen Material 9 ausgebildet ist, um die Induktionswirkung des Induktionselements 6 weiter zu verbessern.

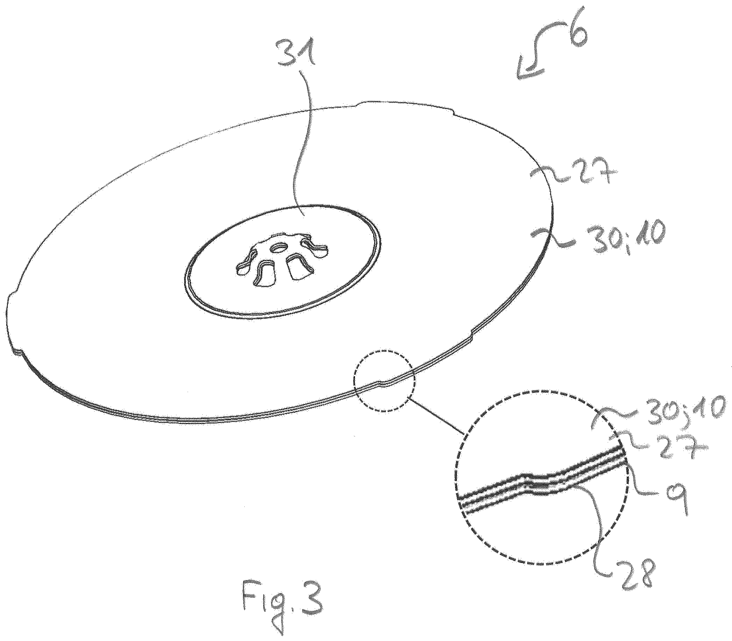

In der Figur 3 ist eine weitere bevorzugte Ausführung des Induktionselements 6 näher dargestellt. Im Unterschied zu dem Ausführungsbeispiel des Induktionselements 6 gemäß der Figur 2 wird hier auf die Durchlassöffnungen 46 verzichtet, um die Induktionswirkung des Induktionselements 6 weiter zu erhöhen. Hier erstreckt sich die elektrisch leitfähige Struktur 30, welche das elektrisch leitfähige Material 10 umfasst, vollflächig mindestens über die erste Seite 27 des Induktionselements 6. Die elektrisch leitfähige Struktur 30, welche das elektrisch leitfähige Material 10 umfasst, ist hier beispielsweise als elektrolytische, galvanische oder chemische Beschichtung ausgebildet.

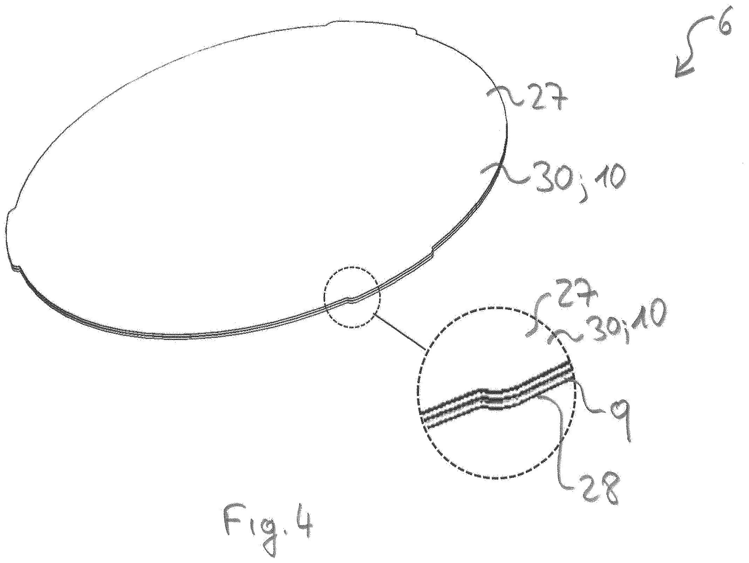

In der Figur 4 ist eine weitere bevorzugte Ausführung des Induktionselements 6 näher dargestellt. Im Unterschied zu dem Ausführungsbeispiel des Induktionselements 6 gemäß der Figur 3 wird auf den Zentralabschnitt 31 verzichtet, um die Induktionswirkung des Induktionselements 6 noch weiter zu erhöhen. Hier erstreckt sich die elektrisch leitfähige Struktur 30, welche das elektrisch leitfähige Material 10 umfasst, vollflächig mindestens über die erste Seite 27 des Induktionselements 6. Die elektrisch leitfähige Struktur 30, welche das elektrisch leitfähige Material 10 umfasst, ist hier beispielsweise als elektrolytische, galvanische oder chemische Beschichtung ausgebildet. Dieses Induktionselement 6 kann beispielsweise mit dem Verbindungselement 13 direkt verschweißt oder verklebt werden, um zwischen dem Verbindungselement 13 und dem Induktionselement 6 eine starre Verbindung herzustellen.

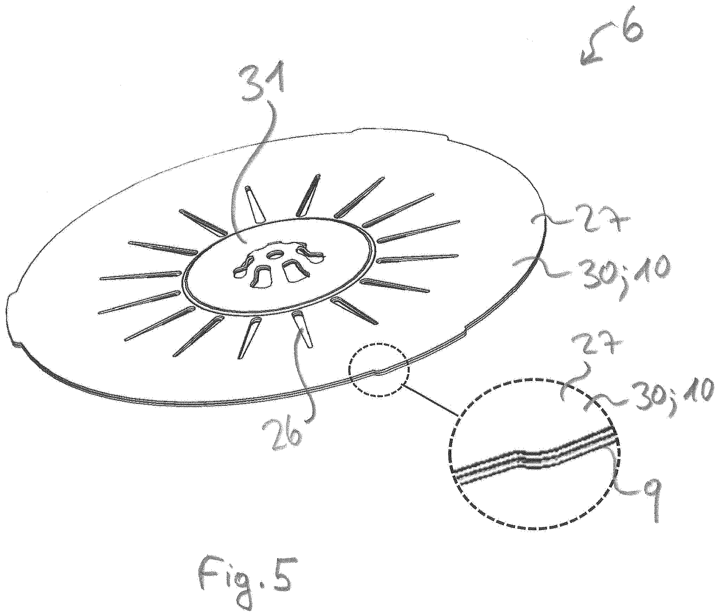

In der Figur 5 ist eine weitere bevorzugte Ausführung des Induktionselements 6 näher dargestellt. Hier wird der Zentralabschnitt 31 vorgesehen, wie dies beispielsweise auch bei der Figur 2 der Fall ist. Ferner sind auch hier Durchlassöffnungen 26 auf dem Induktionselement 6 angeordnet. Wie in der Figur 4 weist das Induktionselement 6 auch hier die elektrisch leitfähige Struktur 30 auf, welche das elektrisch leitfähige Material 10 umfasst. Die elektrisch leitfähige Struktur 30 ist hier beispielsweise als elektrolytische, galvanische oder chemische Beschichtung ausgebildet.

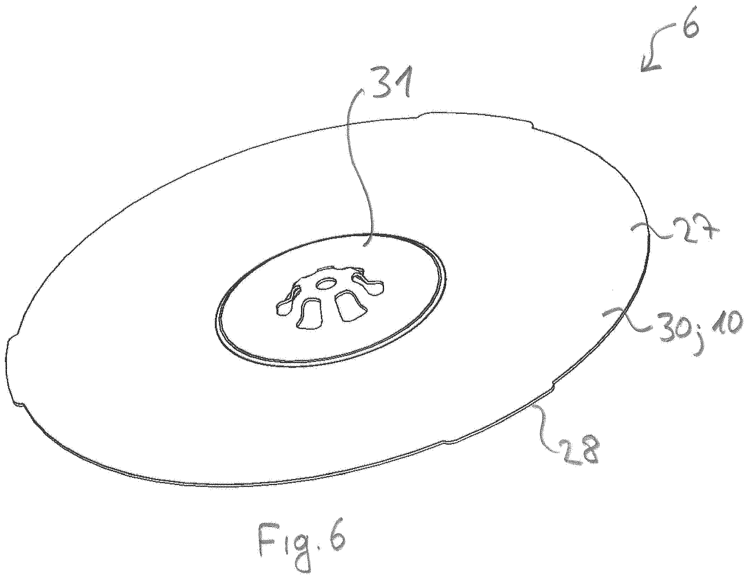

In der Figur 6 ist eine weitere bevorzugte Ausführung des Induktionselements 6 näher dargestellt. Hier wird der Zentralabschnitt 31 vorgesehen, wie dies beispielsweise auch bei der Figur 2 der Fall ist. Ferner wird hier auf die Durchlassöffnungen 26 auf dem Induktionselement 6 verzichtet. Wie beispielsweise in der Figur 4 weist das Induktionselement 6 auch hier die elektrisch leitfähige Struktur 30 auf, welche das elektrisch leitfähige Material 10 umfasst. Die elektrisch leitfähige Struktur 30 ist hier beispielsweise als elektrolytische, galvanische oder chemische Beschichtung ausgebildet.

In den Figuren 2 bis 6 kann das auf dem Induktionselement 6 angeordnete elektrisch leitfähige Material 10 vollständig von dem ferromagnetischen Material 9 umschlossen, insbesondere eingebettet sein oder das aus dem ferromagnetischen Material 9 ausgebildete Induktionselement 6 von dem elektrisch leitfähigen Material 10 vollständig umschlossen, insbesondere eingebettet sein.

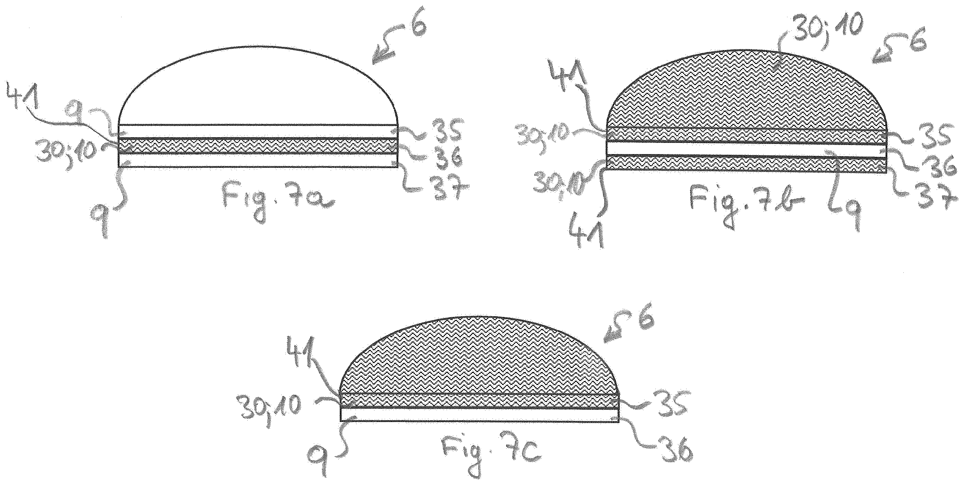

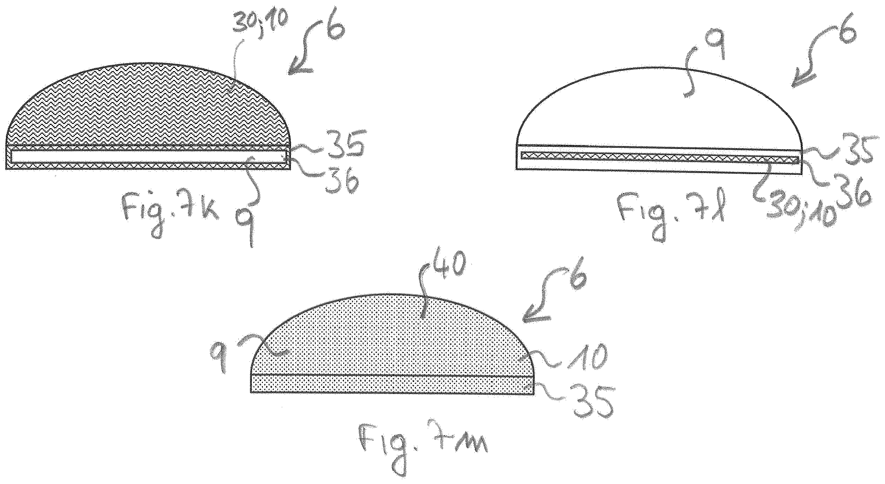

In den Figuren 7a-7m sind schematisch und ausschnittsweise verschiedene Schnittdarstellung des Induktionselements 6 gezeigt. Bei den Figuren 7a-7m sind nicht abschließende Beispiele gezeigt, wie man das Induktionselement 6 ausgestalten könnte. Eine Kombination von unterschiedlichen Ausführungsbeispielen der Figuren 7a-7m ist daher möglich.

Es kann daher vorgesehen sein, dass das Induktionselement 6 einen sandwichförmigen Aufbau aufweist, wobei der sandwichförmige Aufbau mindestens eine, vorzugsweise zwei Schichten umfasst, insbesondere eine erste Schicht 35 und eine zweite Schicht 36 sowie vorzugsweise eine dritte Schicht 37 umfasst. Dabei kann vorgesehen sein, dass die erste Schicht 35 das ferromagnetische Material 9 oder das elektrisch leitfähige Material 10 umfasst, und/oder die zweite Schicht 36 das ferromagnetische Material 9 oder das elektrisch leitfähige Material 10 umfasst und/oder die dritte Schicht 37 das ferromagnetische Material 9 und/oder das elektrisch leitfähige Material 10 umfasst. Mindestens eine der drei Schichten 35, 36, 37 des Induktionselements 6 können jeweils auch Abschnitte 32, 33 umfassen, die die elektrisch leitfähige Struktur 30 aufweisen, welche das elektrisch leitfähige Material 10 umfassen. Denkbar ist es auch, dass mindestens eine der drei Schichten 35, 36, 37 des Induktionselements 6 eine Legierung umfasst, welche zumindest das ferromagnetische Material 9 und das elektrisch leitfähige Material 10 umfasst, wobei das ferromagnetische Material 9 und/oder das elektrisch leitfähige Material 10 als Legierungselement 40 ausgebildet ist. Im Ergebnis kann somit die erste Schicht 35 und/oder die zweite Schicht 36 und/oder die dritte Schicht 37 die elektrisch leitfähige Struktur 30 aufweisen, welche das elektrisch leitfähige Material 10 umfasst oder die erste Schicht 35 und/oder die zweite Schicht 36 und/oder die dritte Schicht 37 die Legierung aufweisen, welche zumindest das ferromagnetische Material 9 und das elektrisch leitfähige Material 10 umfasst, wobei das ferromagnetische Material 9 und/oder das elektrisch leitfähige Material 10 als Legierungselement 40 ausgebildet ist.

Nachfolgend wird näher auf die Figuren 7a-7m eingegangen.

In der Figur 7a sind drei Schichten 35, 36, 37 des Induktionselements 6 dargestellt, wobei die erste Schicht 35 das ferromagnetische Material 9 umfasst, die zweite Schicht 36 die elektrisch leitfähige Struktur 30 aufweisend das elektrisch leitfähige Material 10 umfasst und die dritte Schicht 37 das ferromagnetische Material 9 umfasst. Denkbar ist, dass zumindest ein Seitenrandabschnitt 41 der zweiten Schicht 36 mit einem korrosionsbeständigen Material, insbesondere mit einem Edelstahl beschichtet sein kann.

In der Figur 7b sind drei Schichten 35, 36, 37 des Induktionselements 6 dargestellt, wobei die erste Schicht 35 die elektrisch leitfähige Struktur 30 aufweisend das elektrisch leitfähige Material 10 umfasst, die zweite Schicht 36 das ferromagnetische Material 9 umfasst und die dritte Schicht 37 die elektrisch leitfähige Struktur 30 aufweisend das elektrisch leitfähige Material 10 umfasst. Denkbar ist, dass zumindest ein Seitenrandabschnitt 41 der ersten Schicht 35 und der dritten Schicht 37 mit einem korrosionsbeständigen Material, insbesondere mit einem Edelstahl beschichtet sein können.

In der Figur 7c sind zwei Schichten 35, 36 des Induktionselements 6 dargestellt, wobei die erste Schicht 35 die elektrisch leitfähige Struktur 30 aufweisend das elektrisch leitfähige Material 10 umfasst und die zweite Schicht 36 das ferromagnetische Material 9 umfasst. Denkbar ist, dass zumindest ein Seitenrandabschnitt 41 der ersten Schicht 35 mit einem korrosionsbeständigen Material, insbesondere mit einem Edelstahl beschichtet sein kann.

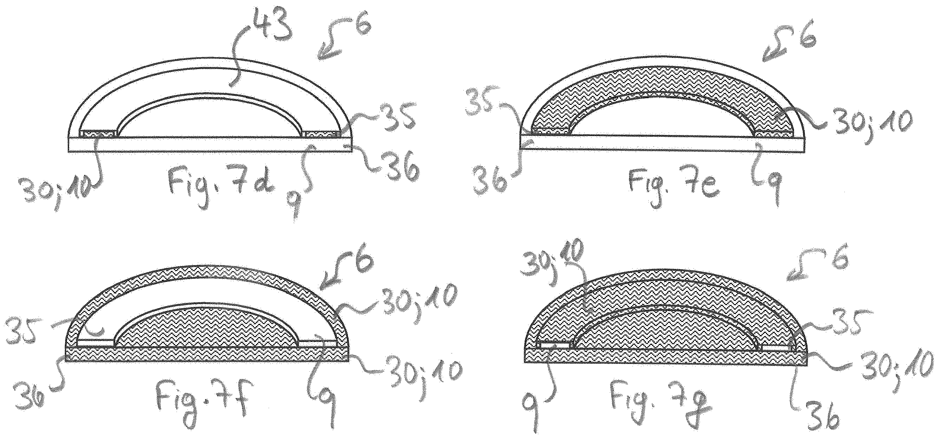

In der Figur 7d sind zwei Schichten 35, 36 des Induktionselements 6 dargestellt, wobei die erste Schicht 35 die elektrisch leitfähige Struktur 30 aufweisend das elektrisch leitfähige Material 10 umfasst und die zweite Schicht 36 das ferromagnetische Material 9 umfasst. Zusätzlich kann hier die erste Schicht 35 vorzugsweise vollständig mit einem korrosionsbeständigen Material, insbesondere mit einer Edelstahlschicht 43 beschichtet sein. Die elektrisch leitfähige Struktur 30, welche das elektrisch leitfähige Material 10 umfasst, ist hier als radial umlaufender Ring, insbesondere Kreis ausgebildet.

In der Figur 7e sind zwei Schichten 35, 36 des Induktionselements 6 dargestellt, wobei die erste Schicht 35 die beispielsweise als separates Bauteil oder Beschichtung ausgebildete elektrisch leitfähige Struktur 30 aufweisend das elektrisch leitfähige Material 10 umfasst und die zweite Schicht 36 das ferromagnetische Material 9 umfasst. Denkbar ist, dass zumindest ein die erste Schicht 35 vollständig mit einem korrosionsbeständigen Material, insbesondere mit einem Edelstahl beschichtet sein kann. Die elektrisch leitfähige Struktur 30, welche das elektrisch leitfähige Material 10 umfasst, ist hier als radial umlaufender Ring, insbesondere Kreis ausgebildet.

In der Figur 7f sind zwei Schichten 35, 36 des Induktionselements 6 dargestellt, wobei die erste Schicht 35 das ferromagnetische Material 9 umfasst, wobei die zweite Schicht 36 die beispielsweise als separates Bauteil oder Beschichtung ausgebildete elektrisch leitfähige Struktur 30 aufweisend das elektrisch leitfähige Material 10 umfasst. Die zweite Schicht 36 kann zusätzlich von dem ferromagnetischen Material 9 eingebettet sein oder von einem korrosionsbeständigen Material, insbesondere mit einem Edelstahl beschichtet sein. Das ferromagnetische Material 9 ist hier als radial umlaufender Ring, insbesondere Kreis ausgebildet.

In der Figur 7g sind zwei Schichten 35, 36 des Induktionselements 6 dargestellt, wobei die erste Schicht 35, die beispielsweise als separates Bauteil ausgebildet ist, das ferromagnetische Material 9 umfasst und die zweite Schicht 36 die elektrisch leitfähige Struktur 30 aufweisend das elektrisch leitfähige Material 10 umfasst. Die erste Schicht 35 kann hier zusätzlich von der elektrisch leitfähigen Struktur 30 aufweisend das elektrisch leitfähige Material 10 eingebettet sein oder von einem korrosionsbeständigen Material, insbesondere mit einem Edelstahl weiter beschichtet sein. Das ferromagnetische Material 9 ist hier als radial umlaufender Ring, insbesondere Kreis ausgebildet.

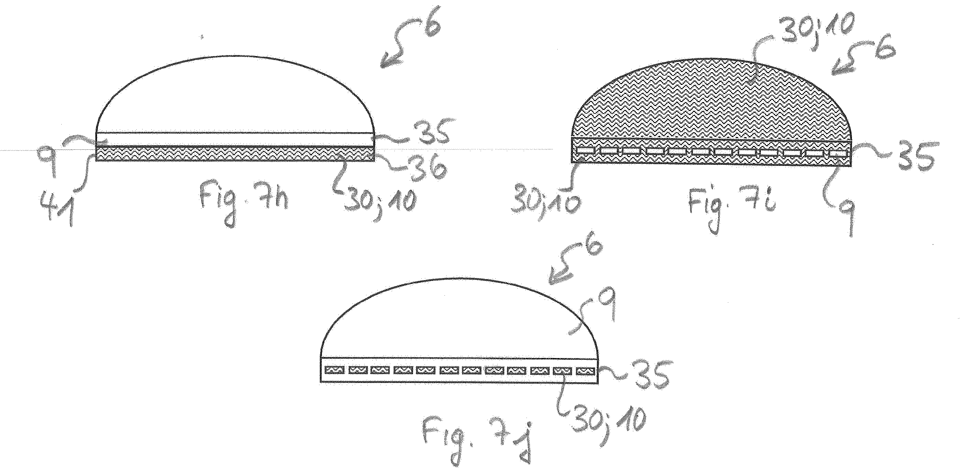

In der Figur 7h sind zwei Schichten 35, 36 des Induktionselements 6 dargestellt, wobei die erste Schicht 35 das ferromagnetische Material 9 umfasst und die zweite Schicht 36 die elektrisch leitfähige Struktur 30 aufweisend das elektrisch leitfähige Material 10 umfasst. Denkbar ist, dass zumindest ein Seitenrandabschnitt 41 der zweiten Schicht 36 mit einem korrosionsbeständigen Material, insbesondere mit einem Edelstahl beschichtet sein kann.

In der Figur 7i ist eine Schicht 35 des Induktionselements 6 dargestellt, wobei die Schicht 35 die elektrisch leitfähige Struktur 30 aufweisend das elektrisch leitfähige Material 10 umfasst. Innerhalb dieser Schicht 35 sind hier beispielsweise mehrere separate Bauteile vorgesehen, insbesondere zumindest teilweise, vorzugsweise vollständig eingebettet, welche jeweils das ferromagnetische Material 9 umfassen.

Die Schicht 35 kann mit einem korrosionsbeständigen Material, insbesondere mit einem Edelstahl beschichtet sein.

In der Figur 7j ist eine Schicht 35 des Induktionselements 6 dargestellt, wobei die Schicht 35 das ferromagnetische Material 9 umfasst. Innerhalb dieser Schicht 35 sind hier beispielsweise mehrere separate Bauteile vorgesehen, insbesondere zumindest teilweise, vorzugsweise vollständig eingebettet, welche jeweils die elektrisch leitfähige Struktur 30 aufweisend das elektrisch leitfähige Material 10 umfassen. Die Schicht 35 kann mit einem korrosionsbeständigen Material, insbesondere mit einem Edelstahl beschichtet sein.

In der Figur 7k ist eine erste Schicht 35 und eine zweite Schicht 36 des Induktionselements 6 dargestellt, wobei die erste Schicht 35 die elektrisch leitfähige Struktur 30 aufweisend das elektrisch leitfähige Material 10 umfasst und die zweite Schicht 36 das ferromagnetische Material 9 umfasst. Innerhalb der ersten Schicht 35 ist hier beispielsweise die zweite Schicht 36 zumindest teilweise, vorzugsweise vollständig eingebettet. Die erste Schicht 35 kann mit einem korrosionsbeständigen Material, insbesondere mit einem Edelstahl beschichtet sein.

In der Figur 7I ist eine erste Schicht 35 und eine zweite Schicht 36 des Induktionselements 6 dargestellt, wobei die erste Schicht 35 das ferromagnetische Material 9 umfasst und die zweite Schicht 36 die elektrisch leitfähige Struktur 30 aufweisend das elektrisch leitfähige Material 10 umfasst. Innerhalb der ersten Schicht 35 ist hier beispielsweise die zweite Schicht 36 zumindest teilweise, vorzugsweise vollständig eingebettet. Die erste Schicht 35 kann mit einem korrosionsbeständigen Material, insbesondere mit einem Edelstahl beschichtet sein.

In der Figur 7m ist eine Schicht 35 des Induktionselements 6 dargestellt, wobei die Schicht 35 des Induktionselement 6 eine Legierung umfasst, welche zumindest das ferromagnetische Material 9 und das elektrisch leitfähige Material 10 umfasst, wobei das ferromagnetische Material 9 und/oder das elektrisch leitfähige Material 10 als Legierungselement 40 ausgebildet ist. Die Schicht 35 kann zusätzlich von einem ferromagnetischen Material 9 eingebettet sein oder von einem korrosionsbeständigen Material, insbesondere mit einem Edelstahl beschichtet sein.

Bei den oben genannten und beschriebenen Ausführungsbeispielen in den Figuren 1A - 7m sind mehrere Kombinationen technischer Merkmale möglich. Beispielsweise kann das Verbindungselement 13 an dem Induktionselement 6 vorzugsweise stoffschlüssig und/oder unbeweglich und/oder starr angeordnet, insbesondere befestigt, bevorzugt angeschweißt sein. Ebenfalls ist es denkbar, dass mindestens eine Durchlassöffnung 26 und/oder Ausnehmung oder vorzugsweise alle Durchlassöffnungen 26 und/oder Ausnehmungen mit einem korrosionsbeständigen Material, insbesondere mit einem Edelstahl beschichtet sein kann.

### Bezugszeichenliste

- 1: Kochgeschirr
- 2: Induktionskochfeld
- 3: Kochgut
- 4: Behälter
- 5: Kontaktabschnitt
- 6: Induktionselement
- 7: Betätigungsmodul
- 8: Deckelelement
- 9: ferromagnetisches Material
- 10: elektrisch leitfähiges Material
- 11: Betätigungselement
- 12: erstes Federelement
- 13: Verbindungselement
- 14: Auslösemodul
- 15: Fluidkammer
- 16: Innenraum
- 17: Fluideinlasskanal
- 18: Fluidauslasskanal
- 19: Kühlungskanal
- 20: drittes Federelement
- 21: thermischer Aktuator
- 22: Rastelement
- 23: Betätigungsgegenrastelement
- 24: zweites Federelement
- 25: kardanisches Element
- 26: Durchlassöffnung
- 27: erste Seite des Induktionselements 6
- 28: zweite Seite des Induktionselements 6
- 29: Seitenrand des Induktionselements 6
- 30: elektrisch leitfähige Struktur
- 31: Zentralabschnitt
- 32: erster Abschnitt
- 33: zweiter Abschnitt
- 34: Zwischenabschnitt
- 35: erste Schicht
- 36: zweite Schicht
- 37: dritte Schicht
- 38: Seitenrandabschnitt
- 40: Legierungselement
- 41: Seitenrandabschnitt
- 42: Halteelement
- 43: Edelstahlschicht

## Patentansprüche

1. Kochgeschirr (1) für ein Induktionskochfeld (2) mit mindestens einem zur Aufnahme von Kochgut (3) und/oder Gargut ausgebildeten Behälter (4) mit mindestens einem Kontaktabschnitt (5) zur Kontaktierung des Induktionskochfelds (2), wobei das Kochgeschirr (1) mindestens ein Induktionselement (6) aufweist, welches relativ bewegbar zu dem Kontaktabschnitt (5) in dem Behälter (4) angeordnet ist, wobei das Kochgeschirr (1) ein Betätigungsmodul (7) zur Erzeugung einer Relativbewegung zwischen dem Induktionselement (6) und dem Kontaktabschnitt (5) umfasst, wobei das Induktionselement (6) durch das Betätigungsmodul (7) von einer Ruheposition in eine Betriebsposition bewegbar ist, wobei das Betätigungsmodul (7) über ein Verbindungselement (13) mit dem Induktionselement (6) verbunden ist, wobei in der Betriebsposition das Induktionselement (6) von dem Induktionskochfeld (2) induktiv erwärmbar, insbesondere erhitzbar ist, und in der Ruheposition das Induktionselement (6) von dem Kontaktabschnitt (5) derart beabstandet ist, dass die von dem Induktionskochfeld (2) erzeugte Induktionswirkung auf das Induktionselement (6) minimiert wird,
**dadurch gekennzeichnet, dass**
das Induktionselement (6) aus einem ferromagnetischen Material (9) ausgebildet ist und zusätzlich mindestens ein elektrisch leitfähiges Material (10) umfasst.

2. Kochgeschirr (1) nach Anspruch 1, **dadurch gekennzeichnet, dass** das Induktionselement (6) eine Legierung umfasst, welche zumindest das ferromagnetische Material (9) und das elektrisch leitfähige Material (10) umfasst., wobei das ferromagnetische Material (9) und/oder das elektrisch leitfähige Material (10) als Legierungselement (40) ausgebildet ist.

3. Kochgeschirr (1) nach Anspruch 1 oder 2, **dadurch gekennzeichnet, dass** mindestens ein Abschnitt (32, 33) des Induktionselements (6), insbesondere angeordnet auf einer ersten Seite (27) und/oder zweiten Seite (28) und/oder auf mindestens einem Seitenrand (29) des Induktionselements (6), eine elektrisch leitfähige Struktur (30) aufweist, welche das elektrisch leitfähige Material (10) umfasst.

4. Kochgeschirr (1) nach Anspruch 3, **dadurch gekennzeichnet, dass** die elektrisch leitfähige Struktur (30), welche das elektrisch leitfähige Material (10) umfasst, als elektrolytische, galvanische oder chemische Beschichtung ausgebildet ist oder als separates Element, insbesondere als Bauteil ausgebildet ist, welches kraftschlüssig und/oder formschlüssig und/oder stoffschlüssig mit dem Induktionselement (6) verbunden ist.

5. Kochgeschirr (1) nach Anspruch 3 oder 4, **dadurch gekennzeichnet, dass** mindestens die elektrisch leitfähige Struktur (30), welche das elektrisch leitfähige Material (10) umfasst, sich auf dem Induktionselement (6) radial von außen nach innen erstreckt.

6. Kochgeschirr (1) nach mindestens einem der Ansprüche 3 bis 5, **dadurch gekennzeichnet, dass** die elektrisch leitfähige Struktur (30), welche das elektrisch leitfähige Material (10) umfasst, als radial umlaufender Ring, insbesondere Kreis ausgebildet ist.

7. Kochgeschirr (1) nach mindestens einem der Ansprüche 3 bis 6, **dadurch gekennzeichnet, dass** mindestens ein erster Abschnitt (32) aufweisend die elektrisch leitfähige Struktur (10) und mindestens ein zweiter Abschnitt (33) aufweisend die elektrisch leitfähige Struktur (30) auf dem Induktionselement (6), insbesondere auf der ersten Seite (27) und/oder zweiten Seite (28) des Induktionselements (6) angeordnet ist, wobei der erste Abschnitt (32) beabstandet zu dem zweiten Abschnitt (33) angeordnet ist, wobei zwischen dem ersten Abschnitt (32) und dem zweiten Abschnitt (33) ein Zwischenabschnitt (34) angeordnet ist.

8. Kochgeschirr (1) nach Anspruch 7, **dadurch gekennzeichnet, dass** der Zwischenabschnitt (34) aus dem ferromagnetischen Material (9) ausgebildet ist.

9. Kochgeschirr (1) nach Anspruch 7 oder 8, **dadurch gekennzeichnet, dass** der Zwischenabschnitt (34) mindestens eine Ausnehmung und/oder mindestens eine Durchlassöffnung (26) umfasst.

10. Kochgeschirr (1) nach mindestens einem der Ansprüche 3 bis 9, **dadurch gekennzeichnet, dass** die elektrisch leitfähige Struktur (30), welche das elektrisch leitfähige Material (10) umfasst, sich vollflächig mindestens über die erste Seite (27) und/oder zweite Seite (28) des Induktionselements (6) und/oder über das gesamte Induktionselement (6), insbesondere über den Seitenrand (29) des Induktionselements (6) erstreckt.

11. Kochgeschirr (1) nach mindestens einem der Ansprüche 1 bis 10, **dadurch gekennzeichnet, dass** das Induktionselement (6) einen sandwichförmigen Aufbau aufweist, wobei der sandwichförmige Aufbau mindestens eine, vorzugsweise zwei Schichten umfasst, insbesondere eine erste Schicht (35) und eine zweite Schicht (36) sowie vorzugsweise eine dritte Schicht (37) umfasst

12. Kochgeschirr (1) nach Anspruch 11, **dadurch gekennzeichnet, dass** der sandwichförmige Aufbau mindestens eine Schicht (35, 36, 37) aufweist, welche das ferromagnetische Material (9) umfasst, und mindestens eine Schicht (35, 36, 37) aufweist, welche das elektrisch leitfähige Material (10) umfasst.

13. Kochgeschirr (1) nach mindestens einen der Ansprüche 1 bis 12, **dadurch gekennzeichnet, dass** das elektrisch leitfähige Material (10) aus Kupfer und/oder Aluminium und/oder Nickel ausgebildet ist.

14. Kochgeschirr (1) nach mindestens einen der Ansprüche 1 bis 13, **dadurch gekennzeichnet, dass** Oberflächen, insbesondere die erste Seite (27) und/oder die zweite Seite (28), des Induktionselements (6) und insbesondere der Seitenrand (29) des Induktionselements, vorzugsweise alle Seitenränder (29) des Induktionselements (6) zumindest teilweise, vorzugsweise vollständig aus dem ferromagnetischen Material (9) und/oder aus dem elektrisch leitfähigem Material (10), vorzugsweise aus Nickel und/oder Aluminium korrosionsbeständig ausgebildet sind.

15. Kochgeschirr (1) nach mindestens einen der Ansprüche 1 bis 14, **dadurch gekennzeichnet, dass** das auf dem Induktionselement (6) angeordnete elektrisch leitfähige Material (10) vollständig von dem ferromagnetischen Material (9) umschlossen, insbesondere eingebettet ist oder das aus dem ferromagnetischen Material (9) ausgebildete Induktionselement (6) von dem elektrisch leitfähigen Material (10) vollständig umschlossen, insbesondere eingebettet ist.
